# EUROPÄISCHE PATENTSCHRIFT

(11) **EP 1 081 427 B1**
(45) Veröffentlichungstag und Bekanntmachung des Hinweises auf die Patenterteilung: **26.07.2006**
(21) Anmeldenummer: 00118703.8
(22) Anmeldetag: 30.08.2000
(51) Int. Cl.: F21S 8/10, F21W 101/10, F21V 17/00, F21V 31/00, B60Q 1/04

(54) **Scheinwerfer für Fahrzeuge**
Vehicle headlamp
Projecteur pour véhicules

(30) Priorität: 01.09.1999 DE 19941523
(43) Veröffentlichungstag der Anmeldung: 07.03.2001
(73) Patentinhaber: Hella KGaA Hueck & Co., 59552 Lippstadt (DE)
(72) Erfinder: Brummel, Reinhold, 59601 Anröchte (DE); Hack, Michael, 33106 Paderborn (DE); Kemper, Albert, 59557 Erwitte (DE); Ley, Peter, 59557 Lippstadt (DE); Meyer, Ernst Otto, 59556 Lippstadt (DE); Nickel, Hans Jürgen, 59557 Lippstadt (DE); Wiese, Gerwin, 59602 Rüthen (DE); von Wuthenau, Alexander, 59597 Erwitte (DE)

(56) Entgegenhaltungen:
- DE-C- 19 728 446
- DE-U- 29 604 137

## Beschreibung

Die Erfindung betrifft einen Scheinwerfer für Fahrzeuge, welcher außen am Fahrzeug mittels eines Halters befestigbar ist, mit einem in ein Gehäuse eingesetzten Lichteinsatz, der einen Reflektor und eine mit einem vorderen Randbereich des Reflektors verklebte Abschlußscheibe aufweist, die zusammen mit dem Reflektor ein zum Gehäuse hin geöffnetes umlaufendes Aufnahmebett für einen Klebstoff begrenzt.

Ein solcher Scheinwerfer für Fahrzeuge ist aus der DE 197 28 446 C1 bekannt. Der Scheinwerfer dient für Nebel- oder Fernlicht und ist durch einen Halter aus außen am Fahrzeug festsetzbar. Der Halter trägt ein aus Kunststoff bestehendes schalenförmiges Gehäuse, in welches von seiner Vorderseite her ein Lichteinsatz eingesetzt ist. Der Lichteinsatz besteht im wesentlichen aus einem schalenförmigen Reflektor einer dem Reflektor zugeordneten Lampe und einer die vordere Öffnung des Reflektors verschließenden Abschlußscheibe. Die Abschlußscheibe weist an ihrem äußeren Rand eine zum Gehäuse hin gerichtete, umlaufende Seitenwand auf. An der Innenseite der Abschlußscheibe liegt der Reflektor mit seinem vorderen Rand an und bildet zusammen mit der äußeren Seitenwand der Abschlußscheibe ein umlaufendes Aufnahmebett für einen Klebstoff. Der schalenförmige Reflektor weist eine elliptische Lichtaustrittsfläche auf und begrenzt das Aufnahmebett durch seine die Schale bildende Wand. Dadurch variiert das Aufnahmebett umlaufend in seiner Breite. Da zwischen dem vorderen Rand des Reflektors und der äußeren Seitenwand der Abschlußscheibe durch große Toleranzen bedingt ein großes Spiel besteht, ist eine genaue Positionierung des Reflektors zur Abschlußscheibe nicht sicher. Weiterhin kann bis zur Aushärtung des Klebers dieser zwischen dem vorderen Randbereich und der Abschlußscheibe ungleichmäßig durchfließen und es entsteht eine von der vorderen Seite des Scheinwerfers her deutlich sichtbare unsaubere Verklebung, die ist aus dekorativen Gründen nicht zu vertreten ist.

Aufgabe der Erfindung ist es, den im Oberbegriff des Anspruches 1 beschriebenen Scheinwerfer für Fahrzeuge derart zu gestalten, daß auch bei zwischen Reflektor und Abschlußscheibe bestehenden großen Toleranzen immer eine genaue Positionierung beider Teile zueinander sicher ist und darüber hinaus von der Vorderseite des Scheinwerfers her kein Klebstoff zu sehen ist. Diese Aufgabe wird nach der Erfindung dadurch gelöst, daß zwischen dem Klebstoff und dem Grund des Aufnahmebetts umlaufend eine Dichtung angeordnet ist, die angrenzend zu sich zugewandten Seitenwänden des Aufnahmebetts verläuft und für den Klebstoff der Grund des Aufnahmebetts ist. Nach einem Einbringen der Dichtung in das Aufnahmebett ist der Reflektor radial genau zur Abschlußscheibe ausgerichtet. In den verbleibenden Raum des Aufnahmebettes wird der Klebstoff eingebracht, der, auch wenn er bis zu seiner Aushärtung dünnflüssig ist, wegen der Dichtung nicht auf die Innenseite der Abschlußscheibe fließen kann.

Der Reflektor und die Abschlußscheibe sind auch vor dem Einbringen des Klebstoffs und beim Aushärten des Klebstoffes zueinander gehalten, wenn die Dichtung unter Vorspannung an den sich zugewandten Seitenwänden des Aufnahmebettes anliegt. Der Reflektor ist in Richtung seines Lichtaustritts genau zur Abschlußscheibe gehalten, wenn der Reflektor an seinem vorderen Rand mit einem umlaufenden radialen Randabschnitt das Aufnahmebett an seinem Grund begrenzt und an einem an die Innenseite der Abschlußscheibe angebrachten umlaufenden Podest anliegt. Die genaue Lage des Reflektors zur Abschlußscheibe ist sicher, wenn die Dichtung so tief in das Aufnahmebett eingedrückt ist, bis der Reflektor mit seinem radial verlaufenden Randabschnitt an dem Podest der Abschlußscheibe anschlägt.

Weiterhin ist es vorteilhaft, wenn die sich zugewandten Seitenwände des Aufnahmebettes umlaufend in einem äquidistanten Abstand zueinander verlaufen und das Aufnahmebett in seinem Querschnitt U-förmig gestaltet ist. Dadurch ist nur eine sehr geringe Klebstoffmenge notwendig, und trotzdem ist die Verbindung zwischen Reflektor und Abschlußscheibe fest und dicht. Außerdem ist in das Aufnahmebett eine Strangdichtung oder eine einfache Formdichtung mit umlaufend gleichbleibendem Querschnitt verwendbar.

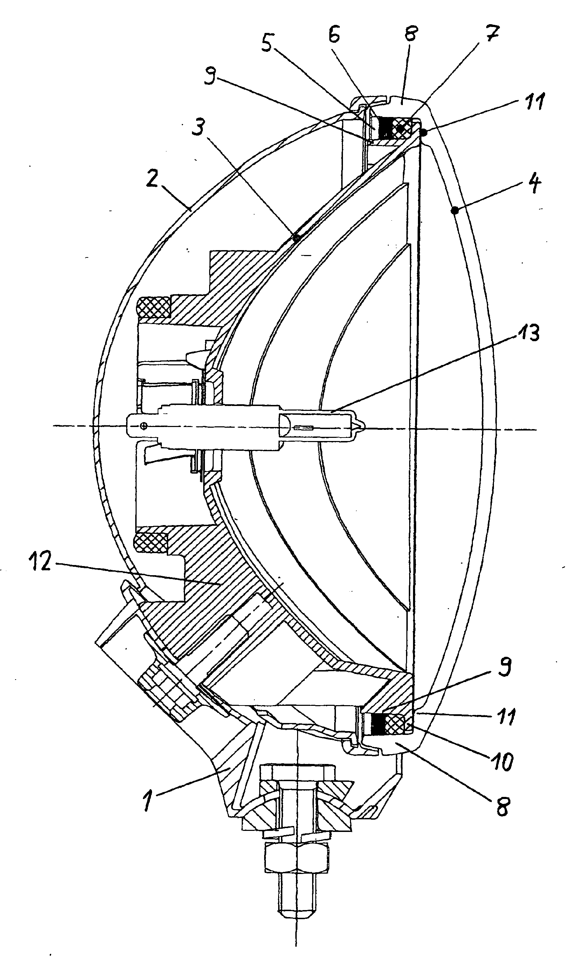

Ein Ausführungsbeispiel nach der Erfindung ist in der Zeichnung dargestellt, welche in einem vertikalen mittleren Schnitt einen Scheinwerfer für Fahrzeuge zeigt, der mittels eines Halters außen am Fahrzeug befestigbar ist.

Der Scheinwerfer weist ein aus Kunststoff bestehendes topfförmiges Gehäuse 2 auf, in welches ein aus einem Reflektor 3 und einer Abschlußscheibe 4 bestehender Lichteinsatz eingesetzt ist. Der Reflektor 3 ist schalenförmig ausgeführt und besteht aus Kunststoff. An den Reflektor 3 ist ein Halteansatz 12 angeformt, der durch eine Öffnung des Gehäuses 2 ragt und der fest mit einem außen am Fahrzeug befestigbaren Halter 1 verbunden ist. Der Reflektor 3 weist im Scheitelbereich eine Öffnung zur Aufnahme einer Lampe 13 auf. Die Abschlußscheibe 4 ist schalenförmig ausgeführt und weist an ihrem äußeren Rand eine zum Gehäuse 2 hin gerichtete umlaufende Seitenwand 8 auf. Der Reflektor 3 weist nahe seinem vorderen Rand eine an seine Rückseite umlaufend angeformte Seitenwand 9 auf, welche mit einer radial nach außen gerichteten Innenseite in einem äquidistanten Abstand zur Innenseite der Seitenwand 8 der Abschlußscheibe 4 verläuft. Der Reflektor 3 weist an seinem vorderen Rand einen radial nach außen gerichteten Randabschnitt 10 auf, welcher zusammen mit den Seitenwänden 8 und 9 ein umlaufende Aufnahmebett 5 bildet. Der Randabschnitt 10 erstreckt sich bis nahe an die Innenseite der Seitenwand 8 und liegt flächig und umlaufend an einem ringförmigen Podest 11 an, welches an die Innenseite der Abschlußscheibe 4 angeformt ist. Das Aufnahmebett 5 ist im Querschnitt U-förmig gestaltet und nimmt eine im Querschnitt rechteckförmige Dichtung 7 auf, welche an dem Grund des Aufnahmebettes 5 und an den sich zugewandten Innenseiten der Seitenwände 8 und 9 unter Vorspannung anliegt. Die Dichtung 7 ist aus Weichgummi hergestellt. In dem verbleibenden Raum des Aufnahmebettes 5, welcher von der Dichtung 7 und den Seitenwänden 8 und 9 begrenzt ist, ist ein Klebstoff 6 eingebracht. Auch wenn ein dünnflüssiger Klebstoff in das Aufnahmebett eingespritzt wird, kann dieser bis zu seiner Aushärtung wegen der Dichtung nicht auf die vordere Innenseite der Abschlußscheibe fließen. Durch die Dichtung 7 ist der den Klebstoff 6 aufnehmende Raum des Aufnahmebetts 5 sauber abgegrenzt. Die Dichtung 7 kann in unterschiedlichen Farben verwendet werden, wodurch für den Scheinwerfer verschiedene Erscheinungsvariationen möglich sind.

## Patentansprüche

1. Scheinwerfer für Fahrzeuge, welcher außen am Fahrzeug mittels eines Halters (1) festsetzbar ist, mit einem in ein Gehäuse (2) eingesetzten Lichteinsatz, der einen Reflektor (3) und eine mit einem vorderen Randbereich des Reflektors (3) verklebte Abschlußscheibe (4) aufweist, die zusammen mit dem Reflektor (3) ein zum Gehäuse (2) hin geöffnetes umlaufendes Aufnahmebett (5) für einen Klebstoff (6) begrenzt, **dadurch gekennzeichnet, daß** zwischen dem Klebstoff (6) und dem Grund des Aufnahmebetts (5) umlaufend eine Dichtung (7) angeordnet ist, die angrenzend zu sich zugewandten Seitenwänden (8 und 9) des Aufnahmebetts (5) verläuft und für den Klebstoff (6) der Grund des Aufnahmebetts (5) ist.

2. Scheinwerfer nach Anspruch 1, **dadurch gekennzeichnet, daß** die Dichtung (7) unter Vorspannung an den sich zugewandten Seitenwänden (8 und 9) des Aufnahmebetts (5) anliegt.

3. Scheinwerfer nach Anspruch 1 oder 2, **dadurch gekennzeichnet, daß** die sich zugewandten Seitenwände (8 und 9) des Aufnahmebetts (5) mit ihren Innenseiten umlaufend in einem äquidistanten Abstand zueinander verlaufen.

4. Scheinwerfer nach Anspruch 3, **dadurch gekennzeichnet, daß** das Aufnahmebett (5) in seinem Querschnitt U-förmig verläuft.

5. Scheinwerfer nach Anspruch 4, **dadurch gekennzeichnet, daß** die Dichtung (7) im Querschnitt rechteckförmig gestaltet ist.

6. Scheinwerfer nach einem der Ansprüche 2 bis 5, **dadurch gekennzeichnet, daß** eine Seitenwand (8) des Aufnahmebetts (5) von einem seitlichen Randabschnitt der Abschlußscheibe (4) gebidet ist, während die andere Seitenwand (9) zumindest abschnittsweise an die Rückseite des Reflektors (3) angebracht ist.

7. Scheinwerfer nach einem der vorstehenden Ansprüche, **dadurch gekennzeichnet, daß** der Reflektor (3) an seinem vorderen Rand mit einem umlaufenden radialen Randabschnitt (10) das Aufnahmebett (5) an seinem Grund begrenzt und an einem Podest (1)1 der Innenseite der Abschlußscheibe (4) anliegt.

8. Scheinwerfer nach einem der vorstehenden Ansprüche, **dadurch gekennzeichnet, daß** die Dichtung (7) aus Weichgummi besteht.

## Claims

1. A vehicle headlamp, which can be fixed to the outside of the vehicle by means of a holder (1) and has a light insert disposed in a housing (2), said light insert comprising a reflector (3) and a cover panel (4) which is glued together with a front peripheral region of the reflector (3) and which, together with the reflector (3), delimits a circumferential bed (5) for receiving an adhesive substance (6), said bed (5) being open towards the housing (2), **characterized in that** located between the adhesive substance (6) and the bottom of the bed (5) is a circumferential seal (7), which extends so as to adjoin facing side walls (8 and 9) of the bed (5) and forms the bottom of the bed (5) for the adhesive substance (6).

2. A headlamp according to Claim 1, **characterized in that** the seal (7) rests with preloading against the facing side walls (8 and 9) of the bed (5).

3. A headlamp according to Claim 1 or 2, **characterized in that** the circumferential inner sides of the facing side walls (8 and 9) of the bed (5) extend so as to be spaced equidistantly from one another.

4. A headlamp according to Claim 3, **characterized in that** the bed (5) is U-shaped in cross-section.

5. A headlamp according to Claim 4, **characterized in that** the seal (7) is rectangular in cross-section.

6. A headlamp according to one of Claims 2 to 5, **characterized in that** one side wall (8) of the bed (5) is formed from a peripheral side portion of the cover panel (4), whilst the other side wall (9) is attached at least in part to the rear side of the reflector (3).

7. A headlamp according to one of the preceding claims, **characterized in that** a circumferential radial peripheral portion (10) at the front edge of the reflector (3) delimits the bottom of the bed (5) and bears against a shoulder (11) on the inside of the cover panel (4).

8. A headlamp according to one of the preceding claims, **characterized in that** the seal (7) is made of soft rubber.

## Revendications

1. Projecteur pour véhicule fixable à l'extérieur du véhicule au moyen d'un support (1), avec une garniture lumineuse insérée dans un boîtier (2) comprenant un réflecteur (3) et une vitre terminale (4) collée dans une zone de bordure frontale du réflecteur (3), laquelle délimite avec le réflecteur (3) un logement (5) circonférentiel pour un adhésif (6), ouvert vers le boîtier (2), **caractérisé en ce qu'**un joint (7) circonférentiel est disposé entre l'adhésif (6) et le fond du logement (5), lequel est contigu à des parois latérales (8 et 9) opposées du logement (5) et forme le fond du logement (5) pour l'adhésif (6).

2. Projecteur selon la revendication 1, **caractérisé en ce que** le joint (7) s'appuie sous contrainte contre les parois latérales (8 et 9) opposées du logement (5).

3. Projecteur selon la revendication 1 ou 2,
**caractérisé en ce que** les parois latérales (8 et 9) opposées du logement (5) s'étendent circonférentiellement, leurs faces internes restant équidistantes l'une de l'autre.

4. Projecteur selon la revendication 3, **caractérisé en ce que** le logement (5) présente une section transversale en U.

5. Projecteur selon la revendication 4, **caractérisé en ce que** le joint (7) présente une section transversale de forme rectangulaire.

6. Projecteur selon l'une des revendications 2 à 5, **caractérisé en ce qu'**une paroi latérale (8) du logement (5) est formée par un segment de bordure latérale de la vitre terminale (4), tandis que l'autre paroi latérale (9) est au moins partiellement appliquée sur la face arrière du réflecteur (3).

7. Projecteur selon l'une des revendications précédentes, **caractérisé en ce que** le réflecteur (3) délimite le logement (5) sur son fond par un segment de bordure (10) radial circonférentiel sur son bord frontal, et s'appuie contre un palier (11) de la face interne de la vitre terminale (4).

8. Projecteur selon l'une des revendications précédentes, **caractérisé en ce que** le joint (7) est en caoutchouc mou.
